# EUROPEAN PATENT APPLICATION

(11) **EP 2 312 846 A1**
(43) Date of publication of application: **20.04.2011**
(21) Application number: 09290752.6
(22) Date of filing: 30.09.2009
(51) Int. Cl.: H04N 7/173, H04N 7/24, H04H 60/91, A63F 13/12

(54) **Method to connect several terminals in a same game community**

(71) Applicant: Alcatel Lucent, 75008 Paris (FR)
(72) Inventor: Germaneau, Alexis, 91620 Nozay (FR); Boidart, Bertrand, 91620 Nozay (FR)
(74) Representative: Hedarchet, Stéphane

(57) **Abstract**

A method for a first user of a terminal to join a game community of second terminal users , in which,
-the first user plays with his terminal to a broadcasted game on a first television channel,
-the first user sends an invitation to a second user of the game community , second user being watching a second channel,
- the first user receives acknowledgment to his invitation by second use,
- second user's Set Top Box changes automatically the television second channel to the first television Channel
- the first user play with the second user in the same interactive game on the same first television channel.

## Description

This invention relates of TV channel control in a community of people playing together in a game related to a broadcasted TV channel. In the context of the current document, it is assumed users use their mobile phones as input device for interactive services.

The broadcasted TV Channel could be included in a network as GSM network, DCS (Digital Communication System), UMTS (Universal Mobile Telecommunications System) or GPRS (General Packet Radio Service en anglais), the mobile phones might comprise functions asGPS 1.5GHz (Global Positionning System) ou Wi-Fi 2.5GHz (Wireless Fidelity) or Wimax (Worldwide Interoperability for Microwave Access) and could be a PDA (Personal Digital Assistant) or a digital multimedia player.

The technical problem is to synchronize several screens of people playing together the interactive TV game with their mobiles phones. Especially, when a user is invited to join a game session by a remote community, he should change manually channel on its TV in order to completely establish the game session. The context of the invitation is mainly given by the TV channel and because the user TV is not displaying that channel after he accepted the invitation, the user can misunderstood the purpose of that invitation. Then the risk is that user disconnect from the service and reject following invitations.

The following described embodiments of the present invention are not exhaustives.

The invention describes a mean for an invited user to join a game community.

For example, a user is playing with his mobile to a TV game and watching the channel1.

He sends an invitation to his friend who is watching the channel2.

When the friend accepts the invitation, his Set Top Box ( or STB) changes automatically the TV channel to the Channel 1 .

The friends can play in the same interactive game on the same TV channel.

A Set Top Box is a device responsible to get and render a video broadcast content. Additionally in the context of the current document, this device is able to process interactive games related to the broadcasted content. STB is necessarily able to read a broadcast network such as DVB or internet. Optionally, STB can be plugged to the internet.

More generally, some actions can be trigged to control STBs when users enter or leave game community.

States of the STBs (eg. channel and specific game states) are transmitted when a user on a new STB enters in the community game session. The new STB is then updated with the states of the other ones.

In this embodiment, the mobile phones are connected to STB via a Wifi or a Bluetooth connexion or via a hotspot connexion. Each users around STBs have their own mobile phone and use it as input device for interactive session.

All friends are part of a community. A community is a set of person playing together in an interactive game. A community can involve several set top boxes in several geographic sites.

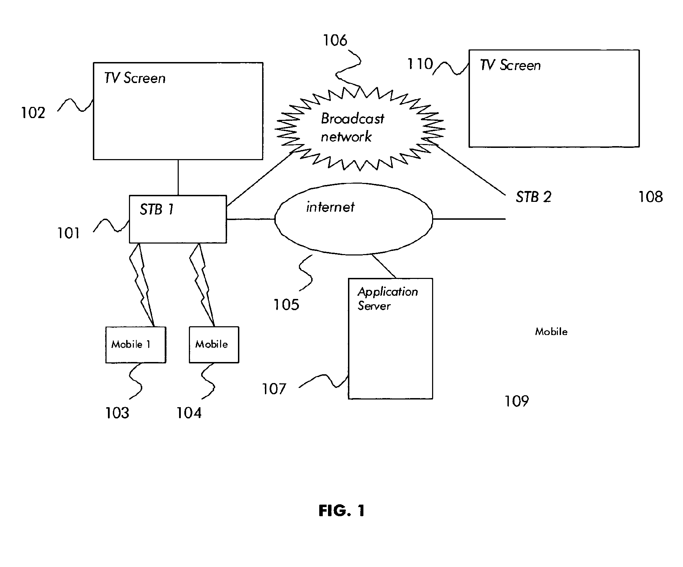

The figure 1 describes an architecture overview where set top boxes (STB) are connected together to Internet or any other transport network 105.

103 104 and 109 represent mobile phones connected to a hot spot that is local to the set top box. 103, 104 and 109 are together in the same interactive session (means are playing together to interactive program).

101 and 108 represent two different set top boxes in two different sites. That two set top boxes receive video and applicative content via a broadcast transport network 106.

For IPTV solution, 105 and 106 can be the same network (Internet) but IPTV is not strictly required and 106 can be for instance DVB radiobroadcast network.

102 and 110 are the TV Screens plugged to the set top boxes 101 and 108.

107 is a server that manage game sessions between users.

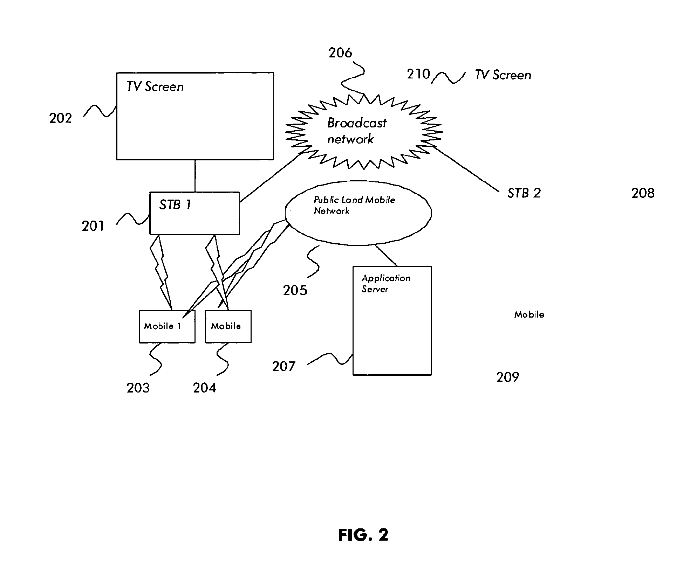

The figure 2 describes another embodiment than figure 1 in cases set top boxes are not connected to an Internet transport.

In that case mobile 203, 204 and 209 are connected:
- To STB via a local hot spot
- To the game session server 204 via an urban radio mobile infrastructure 205 such as GSM or CDMA.

The main problem, in that two architectures, is to control simultaneously content of:
- Application on the mobiles of the community.
- TV content displayed in different sites of the community of players
- Running applications on different set top boxes of the players

For instance, mobile 103 [FIGURE 1] plugged in STB 101 can invite mobile 109 [FIGURE 1] of STB 108.

But no mechanism is described in the case the STB 108 don't display the appropriate TV channel.

And the mobile 109 accepts the invitation to a game related to channel seen by 103 and 104 on the screen 102. If the user 109 see another program on its screen 110, he will probably not understand the purpose of the game.

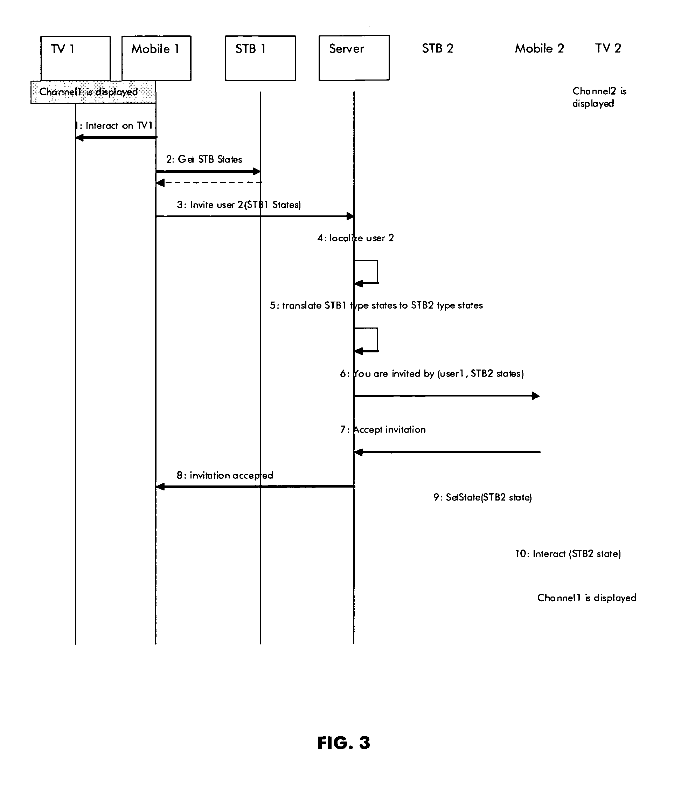

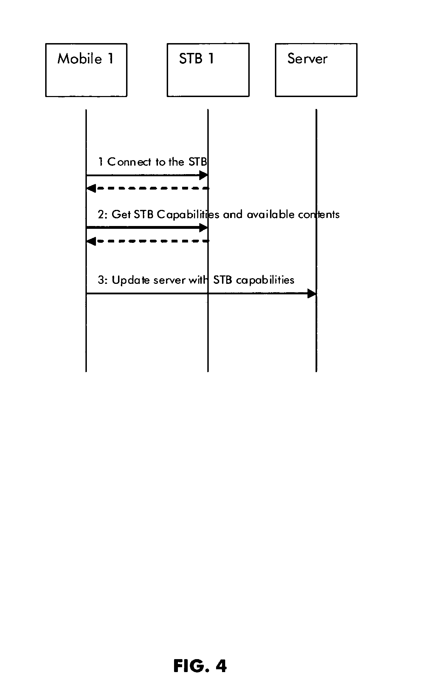

The sequence diagram of figure 3 describes a generic procedure when a user enters in a community.
STEP 1: The mobile 1 interacts with the TV1 (the user1 plays an interactive game on channel 1)
STEP 2: The mobile 1 wants to invite the mobile 2 in a remote site. It gets state of its set top box (That state contains at least current TV channel identifier and game session information).
STEP 3: The mobile 1 sends a request for invite the user 2 to the server. This request transports states of the STB 1 retrieved by the mobile 1 in STEP 2.
STEP 4: The server localizes the mobile 2.
STEP 5: If necessary the server can translate state of the STB 1 in a format that is compatible to capabilities of the STB 2. It is assumed the server known the STB2 capabilities and available contents. That information can be exchanged during an anterior phase when the mobile connects to the STB ([FIGURE 4]).
STEP 6, 7 : User 2 accepts the invitation
STEP 8: User 2 updates the state of its own STB to be synchronized with the game.
STEP 9: The mobile 2 interacts with the TV2 (The TV channel automatically switches on channel 1 and the user2 plays an interactive game with user1 on channel 1)

The figure 4 describes a procedure to used by mobile to update the server with STB capabilities when its connect to the service.
STEP 1: The mobile establishes a connection with a hotspot in the mobile.
STEP 2: The mobile retrieves from the STB capabilities and available contents.
STEP 3: The mobile updates the server according to such capabilities.

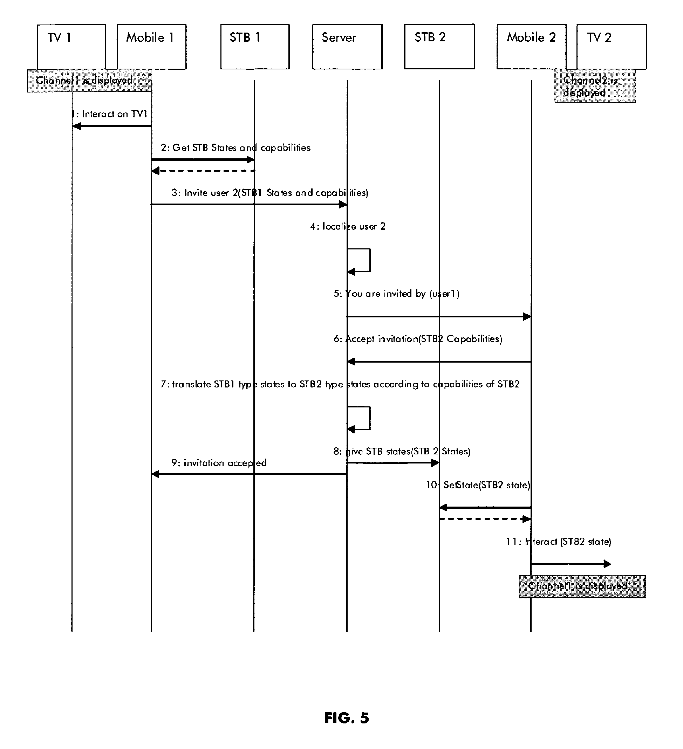

The figure 5 describes the same embodiment as figure 3 but with STB capabilities exchange during the invitation acceptance.

## Claims

1. A method for a first user of a terminal to join a game community of second terminal users , in which,
- the first user plays with his terminal to a broadcasted game on a first television channel,
- the first user sends an invitation to a second user of the game community , second user being watching a second channel,
- the first user receives acknowledgment to his invitation by second use,
- second user's terminal changes automatically the television second channel to the first television channel
- the first user play with the second user in the same interactive game on the same first television channel.
